# EUROPÄISCHE PATENTSCHRIFT

(11) **EP 1 054 184 B1**
(45) Veröffentlichungstag und Bekanntmachung des Hinweises auf die Patenterteilung: **08.12.2004**
(21) Anmeldenummer: 00108507.5
(22) Anmeldetag: 19.04.2000
(51) Int. Cl.: F16F 9/06, F16F 9/20, F16F 9/52

(54) **Schwingungsdämpfer**
Vibration damper
Amortisseur de vibrations

(30) Priorität: 19.05.1999 DE 19922839
(43) Veröffentlichungstag der Anmeldung: 22.11.2000
(73) Patentinhaber: ZF Sachs AG, 97424 Schweinfurt (DE)
(72) Erfinder: Clemens, Dietmar, 53783 Eitorf (DE); Medenblick, Henri, 97422 Schweinfurt (DE); Van Kasteel, Richard, 53721 Siegburg (DE); Wolff, Michael, 53721 Siegburg (DE); Weber, Johannes, 53809 Ruppichteroth (DE)

(56) Entgegenhaltungen:
- EP-A- 0 322 608
- DE-C- 922 273
- GB-A- 1 336 868
- US-A- 2 357 278
- US-A- 2 853 159
- US-A- 5 347 771
- US-A- 5 662 046
- PATENT ABSTRACTS OF JAPAN vol. 1998, no. 10, 31. August 1998 (1998-08-31) & JP 10 121775 A (KAJIMA CORP), 12. Mai 1998 (1998-05-12)
- PATENT ABSTRACTS OF JAPAN vol. 013, no. 477 (M-885), 27. Oktober 1989 (1989-10-27) & JP 01 188732 A (NISSAN MOTOR CO LTD), 28. Juli 1989 (1989-07-28)

## Beschreibung

Die Erfindung bezieht sich auf einen Schwingungsdämpfer mit einem Arbeitszylinder sowie an den Enden angeordneten Befestigungselementen, einem an einer Kolbenstange befestigten Arbeitskolben, der den Arbeitszylinder in zwei Arbeitsräume unterteilt, Dämpfungsventilen zur Erzeugung einer Dämpfungskraft in mindestens einer Bewegungsrichtung, wobei die Kolbenstange durch den gesamten Arbeitszylinder hindurch verläuft und die beiden Endbereiche durchdringt.

Derartige Schwingungsdämpfer sind bereits bekannt (z.B. DE 18 03 588 A1), bei denen der Dämpfungskolben den Arbeitszylinder in zwei Arbeitskammer unterteilt, wobei die mit dem Dämpfungskolben verbundene Kolbenstange durch die Arbeitsräume hindurch verläuft. Der Arbeitskolben besitzt dabei Ausnehmungen, wie auch der Arbeitszylinder selbst nach radial außen Ausnehmungen zur zielung einer Dämpfungskraft besitzt. Die in den Stimseiten befindlichen Rückschlagventile dienen der Befüllung des jeweiligen Arbeitsraumes, so dass das Dämpfungsmittel in den jeweiligen stirnseitigen Teil des Arbeitsraumes nachfließen kann. Bewegt sich der Dämpfungskolben in die umgekehrte Richtung, werden die Rückschlagventile geschlossen, die Dämpfkraft wird durch den eigentlichen Arbeitskolben erzielt und wobei jetzt die gegenüberliegenden Rückschlagventile öffnen, um das Dämpfungsmittel aus dem Ausgleichsraum in den entsprechenden Arbeitsraum nachfließen lassen zu können.

Nachteilig ist bei dieser Ausführungsform, dass die eigentlichen Dämpfungsventile im Arbeitskolben angeordnet sind, hierdurch ist die dynamische Steifigkeit über der Frequenz zu niedrig, so dass die Funktion des Dämpfers nicht optimal ist.

Es sind des weiteren hydraulische Puffer bekannt, welche zum Dämpfen von Bewegungen in Rohren einer Dämpfleitungsanlage (DE 21 62 540 A1) herangezogen werden. Die Dämpfungsventile sind dabei in Ruhestellung geöffnet, so dass die beiden Endräume des Zylinders über den Vorratsbehälter miteinander in Verbindung stehen. Dieser Stand der Technik entspricht dem Oberbegriff des Anspruchs 1.

Aufgabe der Erfindung ist es, bei einem Schwingungsdämpfer mit einer durch den Arbeitszylinder hindurch verlaufenden Kolbenstange die dynamische Steifigkeit und die dynamische Dämpfungsrate zu erhöhen.

Zur Lösung dieser Aufgabe ist erfindungsgemäß vorgesehen, dass der Ausgleichsraum die Arbeitsräume koaxial umschließt, wobei jeder Arbeitsraum lediglich über ein Dämpfungsventil mit dem Ausgleichsraum und in entgegengesetzter Richtung vom Ausgleichsraum lediglich über ein Rückschlagventil mit dem Arbeitsraum verbunden ist.

Bei dieser Ausbildung ist von Vorteil, dass durch die Verlegung der Dämpfungsventile vom Arbeitskolben in die Stirnseiten der Arbeitsräume die Funktion durch die Druckdifferenz zwischen den beiden Arbeitsräumen und dem Ausgleichsraum verbessert wird. Das Druckniveau im Ausgleichsraum ist zum größten Teil konstant, so dass die eigentliche Funktion des Schwingungsdämpfers nur durch den Druck in den beiden Arbeitsräumen bestimmt wird. Die bei Verschiebung des Kolbens wirksame Ölsäule beaufschlagt jeweils nur das entsprechende Dämpfungsventil für diese Druckrichtung, dies trifft in der umgekehrten Bewegungsrichtung des Arbeitskolbens ebenfalls zu.

Des weiteren ist von Vorteil, dass die dynamische Steifigkeit durch eine völlige Trennung der Arbeitsraum A und B erhöht wird. Das bedeutet, dass in der Druckstufe nur der Arbeitsraum A und in der Zugstufe nur der Arbeitsraum B mit Druck beaufschlagt wird. Durch diese völlige Trennung wird die Strömung des Dämpfungsmittels durch das entsprechende Dämpfungsventil definiert, da in beiden Richtungen der Druckunterschied nur in dem zugehörigen Arbeitsraum auftritt.

Eine einfache Ausgestaltung der Dämpfungsventile sieht vor, dass die Dämpfungsventile federbelastet ausgebildet sind.

Nach einer weiteren Ausgestaltung ist vorgesehen, dass der axial verschiebbare Arbeitskolben beide Arbeitsräume gegeneinander abdichtet. Vorteilhaft ist hierbei, dass der Arbeitskolben als einfaches Bauteil ausgeführt werden kann, da die Dämpfungsventile nicht mehr Bestandteil des Arbeitskolbens sind.

Zur Ausnutzung des vorhandenen Bauraumes im Schwingungsdämpfer ist vorgesehen, dass die Dämpfungsventile und/oder die Rückschlagventile an der Stirnseite des jeweiligen Arbeitsraumes angeordnet sind.

Ein bevorzugtes Ausführungsbeispiel der Erfindung ist in der Zeichnung schematisch dargestellt.

Es zeigt:

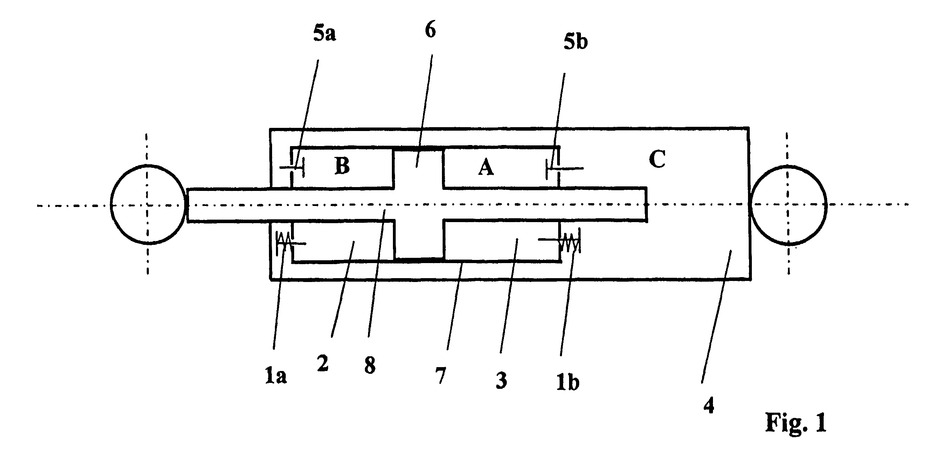

Figur 1 einen Schwingungsdämpfer als Prinzipskizze.

Der in Figur 1 dargestellte Schwingungsdämpfer befindet sich im Arbeitszylinder 7 der Arbeitskolben 6, der den Arbeitszylinder 7 in die beiden Arbeitsräume 2 und 3 unterteilt. Der Arbeitskolben 6 ist ohne jegliche Ventile ausgebildet. Die entsprechenden Rückschlagventile 5 bzw. Dämpfungsventile 1 sind in der jeweiligen Stirnseite des jeweiligen Arbeitszylinders 2 oder 3 angeordnet. Die Kolbenstange 8 wird zu beiden Seiten des beitszylinders 7 aus den Stirnseiten herausgeführt, während sie auf der einen Seite in einen Ausgleichsraum 4 eintaucht und auf der anderen Seite in die Atmosphäre geführt ist. Zu beiden Seiten sind Befestigungselemente angeordnet.

Bei der Einwärtsbewegung des Arbeitskolbens 6 schließt das Rückschlagventil 5b und das Dämpfungsventil 1b ist für die Erzielung einer Dämpfungskraft verantwortlich. Das im Arbeitsraum 3 befindliche Dämpfungsmittel wird somit am Dämpfungsventil 1b vorbei in den Ausgleichsraum 4 gefördert. Gleichzeitig öffnet das Rückschlagventil 5a und das Dämpfungsmittel kann aus dem Ausgleichsraum 4 in den Arbeitsraum 2 nachlaufen. Das Dämpfungsventil 1a schließt.

In der entgegengesetzten Richtung, wenn sich der Arbeitskolben 6 auswärts bewegt, wird das Rückschlagventil 5a geschlossen, das Dämpfungsventil 1a übernimmt die Erzielung einer Dämpfungskraft, wobei das Dämpfungsmittel aus dem Arbeitsraum 2 vorbei am Dämpfungsventil 1a in den Ausgleichsraum 4 strömt. Gleichzeitig öffnet das Rückschlagventil 5b und eine entsprechende Menge an Dämpfungsmittel kann in den Arbeitsraum 3 strömen, dabei schließt jedoch das Dämpfungsventil 1b.

Die optimale dynamische Steifigkeit sowie die dynamische Dämpfungsrate wird dadurch erzielt, dass der Arbeitskolben 6 jeweils nur in einer Richtung gegen ein entsprechendes Dämpfungsventil 1a oder 1b arbeiten muss. Auf der Rückseite des Arbeitskolbens 6 strömt lediglich Dämpfungsmittel aus dem Ausgleichsraum 4 nach. Die gleiche Funktion erfolgt in der umgekehrten Bewegungsrichtung des axial verschieblichen Arbeitskolbens 6.

### Bezugszeichenliste

- 1 -: Dämpfungsventil
- 2 -: Arbeitsraum
- 3 -: Arbeitsraum
- 4 -: Ausgleichsraum
- 5 -: Rückschlagventil
- 6 -: Arbeitskolben
- 7 -: Arbeitszylinder
- 8 -: Kolbenstange

## Patentansprüche

1. Schwingungsdämpfer mit einem Arbeitszylinder (7) sowie an den Enden angeordneten Befestigungselementen, einem Ausgleichsraum (4), einem an einer Kolbenstange (8) befestigten Arbeitskolben (16), der den Arbeitszylinder (7) in zwei Arbeitsräume (3) unterteilt, Dämpfungsventilen (1) zur Erzeugung einer Dämpfungskraft in beiden Bewegungsrichtungen, wobei die Kolbenstange (8) durch den gesamten Arbeitszylinder (7) hindurch verläuft und die beiden Endbereiche durchdringt, und mit Rückschlagventilen (5),
**dadurch gekennzeichnet,**
**dass** der Ausgleichsraum (4) die Arbeitsräume (2, 3) koaxial umschließt, wobei jeder Arbeitsraum (2, 3) lediglich über ein Dämpfungsventil (1) mit dem Ausgleichsraum (4) und in entgegengesetzter Richtung vom Ausgleichsraum (4) lediglich über ein Rückschlagventil (5) mit dem Arbeitsraum (2, 3) verbunden ist.

2. Schwingungsdämpfer nach Anspruch 1,
**dadurch gekennzeichnet,**
**dass** die Dämpfungsventile (1) federbelastet ausgebildet sind.

3. Schwingungsdämpfer nach Anspruch 1,
**dadurch gekennzeichnet,**
**dass** der axial verschiebbare Arbeitskolben (6) beide Arbeitsräume (2, 3) gegeneinander abdichtet.

4. Schwingungsdämpfer nach Anspruch 1,
**dadurch gekennzeichnet,**
**dass** die Dämpfungsventile (1) und/oder die Rückschlagventile (5) an der Stirnseite des jeweiligen Arbeitsraumes (2, 3) angeordnet sind.

## Claims

1. Vibration damper having an operating cylinder (7) and fastening elements arranged at the ends, a compensation space (4), an operating piston (16) which is fastened to a piston rod (8) and subdivides the operating cylinder (7) into two operating spaces (3), and damping valves (1) for producing a damping force in both movement directions, the piston rod (8) extending through the entire operating cylinder (7) and penetrating the two end regions, and having non-return valves (5), **characterized in that** the compensation space (4) coaxially surrounds the operating spaces (2, 3), each operating space (2, 3) being connected to the compensation space (4) only via a damping valve (1) and being connected, in the opposite direction, from the compensation space (4) to the operating space (2, 3) only via a non-return valve (5).

2. Vibration damper according to Claim 1, **characterized in that** the damping valves (1) are configured to be spring-loaded.

3. Vibration damper according to Claim 1, **characterized in that** the axially displaceable operating piston (6) seals off both operating spaces (2, 3) with respect to one another.

4. Vibration damper according to Claim 1, **characterized in that** the damping valves (1) and/or the non-return valves (5) are arranged on the end of the respective operating space (2, 3).

## Revendications

1. Amortisseur de vibrations avec un cylindre de travail (7) et des éléments de fixation disposés sur les extrémités, un espace de compensation (4), un piston de travail (16) fixé sur une tige de piston (8), qui divise le cylindre de travail (7) en deux espaces de travail (3), des vannes d'amortissement (1) pour la génération d'une force d'amortissement dans deux sens de déplacement, la tige de piston (8) étant agencée à travers l'ensemble du cylindre de travail (7) et traversant les deux zones d'extrémité, et avec des vannes anti-retour (5),
**caractérisé en ce que**
l'espace de compensation (4) entoure de façon coaxiale les espaces de travail (2, 3), chaque espace de travail (2, 3) étant relié uniquement par une vanne d'amortissement (1) à l'espace de compensation (4) et dans le sens opposé de l'espace de compensation (4) uniquement au moyen d'une vanne anti-retour (5) à l'espace de travail (2, 3).

2. Amortisseur de vibrations selon la revendication 1, **caractérisé en ce que** les vannes d'amortissement (1) sont conçues avec une sollicitation par ressort.

3. Amortisseur de vibrations selon la revendication 1, **caractérisé en ce que** le piston de travail (6) coulissant axialement rend étanche les deux espaces de travail (2, 3) l'un par rapport à l'autre.

4. Amortisseur de vibrations selon la revendication 1, **caractérisé en ce que** les vannes d'amortissement (1) et/ou les vannes antiretour (5) sont disposées sur le côté avant de l'espace de-travail (2, 3) respectif.
